# EUROPEAN PATENT SPECIFICATION

(11) **EP 3 282 861 B1**
(45) Date of publication and mention of the grant of the patent: **26.08.2020**
(21) Application number: 16719794.6
(22) Date of filing: 12.04.2016
(51) Int. Cl.: A23G 3/34, A23G 3/54, A23G 4/06, A23G 4/20

(54) **TRANSPARENT HARD COATINGS STABLE UNDER ENVIRONMENTAL CONDITIONS**
TRANSPARENTE, UNTER UMWELTBEDINGUNGEN STABILE HARTBESCHICHTUNGEN
REVÊTEMENTS DURS TRANSPARENTS, STABLES DANS DES CONDITIONS ENVIRONNEMENTALES

(30) Priority: 14.04.2015 IT UB20150047
(43) Date of publication of application: 21.02.2018
(73) Proprietor: Perfetti Van Melle S.p.A., 20020 Lainate (IT)
(72) Inventor: BALDI, Gianni, 20020 Lainate (mi) (IT); GÜLEN, Isil, 34522 Esenyurt / Istanbul (TR)
(74) Representative: Bianchetti Bracco Minoja S.r.l.
(86) International application number: PCT/EP2016/057997
(87) International publication number: WO 2016/166092

(56) References cited:
- EP-B1- 1 289 377
- WO-A1-01/15545
- WO-A1-93/18663
- WO-A1-2007/070061
- WO-A1-2014/058732
- WO-A2-2007/124093
- WO-A2-2011/084759
- WO-A2-2011/084760
- WO-A2-2014/160823
- US-A1- 2002 160 083
- US-A1- 2004 180 121
- US-A1- 2008 014 302
- US-A1- 2009 028 998
- US-A1- 2009 123 502
- US-A1- 2009 142 443
- US-A1- 2010 136 164

## Description

The present invention relates to confectionery products with a hard transparent coating that maintains its properties over time, and with a preferably multicoloured centre.

### Prior art

Confectionery products with multicoloured surfaces are well known. For example, US 5437879 describes products in the form of sticks with a plurality of layers and colours. Said products are neither coated nor crunchy. They are sensitive to various environmental conditions, and to guarantee their preservation they are individually wrapped in paper and then inserted into packaging made of another material.

WO 2009061871 describes chewing gum centres with alternating layers of fondant, possibly having a plurality of colours and flavourings. The centres can be coated by a layer obtained from syrups with binding agents, crystals of sugars or polyalcohols being included in said syrup. The centres and the various materials of which they are made can be glimpsed through the coating layer, which gives the product a frosted or sanded visual effect. Said layer is not a hard coating and is not crunchy, either at the time of manufacture or during the life of the product.

WO 2014/007936 describes a chewing gum packaged in a container consisting of a centre which, though coated with a layer of mannitol powder, remains visible through the coating layer. The product is soft and not crunchy.

Products and techniques for obtaining hard coatings are known; however, said coatings are usually opaque, either because they contain white pigments such as titanium dioxide, calcium carbonate or starch, or because they comprise crystallised sugars or substitutes (ZDS, Dragee Symposium - Panned Goods Symposium, 29.9-1.10.2003 Friedrichshafen).

EP 1289377 describes a chewing gum with a centre having a plurality of regions of different colours, coated with a hard, crunchy, transparent coating comprising sorbitol and binding agents such as gum arabic or gelatin.

The coating made according to EP 1289377 is the only hard, transparent, crunchy coating reported in the prior art. However, said coating cannot withstand variations in temperature or humidity.

US2009/142443 discloses a chewing gum combined with a candy containing caffeine that may be coated with opaque coating. Transparent hard coating are generically cited without any specific disclosure and no mention is made about the stability of coating under environmental conditions. The document generically discloses a coating that can be made by polyols and that may include several opaque layers and an optional transparent layer. The materials required in order to obtain the transparent coating are not disclosed.

WO2011/084759, WO2011/084760 and WO2007/124093 disclose multilayered chewing gum-candy compositions including a particulate coating composition.

WO2014/160823 describes translucent or transparent hard candy shells containing a liquid center composition. The hard candy shells are obtained by cooking powdered polyol, e.g. isomalt, in water to give a shell melt.

WO93/18663 discloses a confectionery item covered with multiple coatings, a first coating based on xylitol and a second coating based on isomalt. In this document there is no reference to transparency and the coating can contain opacifying ingredients. WO93/18663 is silent about transparent coating.

US2009/028998 discloses center-filled chewing gums. A transparent hard coating is generically mentioned without any concrete teaching about its composition or method of manufacture. The coating is generically described to be made by polyols and may include several opaque layers and an optional transparent layer. US2009/028998 is silent regarding the stability of the coating. Similarly to US2009/142443, this document does not disclose the materials required in order to obtain the transparent coating.

US2008/014302 discloses center-filled chewing gum containing isomalt in the gum formula. The gum may be coated, but the coating may be soft and opaque. Transparent hard coating of the chewing gums are only generically discussed. The examples of this document do not mention transparent coating.

US2010/136164 discloses a center-filled gum in a package containing indicia of tastants (flavours).

US2002/160083 addresses the problem of stability of hard candies by applying a coating with a polyol syrup. The preferred polyol is mannitol. Isomalt is only generically cited along with other conventional polyols and no example of isomalt coating is provided. Isomalt is used only in the hard candy region. In addition, US2002/160083 teaches that not all the coatings may be successfully used. Specifically hard coating is reported as not suitable.

WO2014/058732 discloses two adjacent candy regions, the outer one being obtained as a molten mass by cooking amorphous material. A coating is not disclosed.

WO2007/070061 discloses a combination of a chewing gum center and a coating, wherein both components (center and coating) contain the same polyol. This feature secures the stability of the crunchy consistency. Transparency is not considered by this document, which in fact provides for the inclusion of calcium carbonate or titanium dioxide in the coating.

WO01/15545 discloses a process for coating chewing gum that results in a good quality hydrogenated isomaltulose coating in a significantly reduced amount of coating time.

US2004/180121 discloses an ice cream surrounded by a transparent, translucent cone made by "hi boiled" or "hard boiled" sucrose and glucose syrup, maltitol, isomalt, or a modified isomalt. As in WO2014/160823, isomalt is subjected to boiling in water to obtain a molten mass that is formed into a cone. The so obtained cone cannot be considered a coating in the technical meaning of this term in the field of confectionery.

### Description of the invention

It has now been discovered that a hard, crunchy, transparent coating which is stable over time can be obtained by using isomalt syrup for more than 90% by weight of the coating and isomalt powder for less 3% by weight of the coating.

In particular, it has been found that the use of isomalt syrup for more than 90% by weight of the coating and isomalt powder for less 3% by weight of the coating in the manufacture of a hard coating, without opacifying agents selected from titanium dioxide, calcium carbonate, starch and calcium phosphate, produces transparent coatings with better properties than those of the prior art. Moreover, the coatings thus obtained are more stable under different environmental conditions than the hard transparent coatings of the prior art, and maintain their crunchiness and transparency for longer.

Moreover, the transparent coatings obtained according to the invention withstand graining, namely surface crystallisation of the coating. When graining of the transparent coating occurs, non-transparent white spots or white strips form, which may be small or cover up to an entire side of the dragee. Graining reduces transparency to an unacceptable extent.

The hard coating is obtained according to conventional techniques, by introducing a plurality of centres or cores into rotating pans, onto which a syrup containing sugars or substitutes, binders, flavourings and other additives is sprayed, so as to distribute the syrup in a thin layer on the surface of the cores. The syrup is then air-dried to induce at least partial crystallisation (ZDS, Dragee Symposium - Panned Goods Symposium, 29.9-1.10.2003 Friedrichshafen). Said steps are repeated up to 100 times, in order to cover the centres with a multitude of small layers of dried syrup. Powders are also commonly used, being applied to the centres wet with syrup to reduce the drying time and accelerate crystallisation of the sugars or substitutes. Hard coating can be applied to various centres, such as dried fruit, candies (such as Mentos®) or chewing gum (such as Vivident Xylit®). A hard coating has the commonly recognised characteristic of being "crunchy", unlike other types of covering such as a soft coating, sanding or dusting.

The term "crunchy" means a sensory characteristic of the coating which, when bitten, enables the consumer to perceive the presence of a hard crust covering a softer core. The crunchy coating breaks into a plurality of flakes, producing a characteristic texture sensation and a characteristic sound. This property can be measured by discontinuous or continuous hedonic scales, in particular with a Visual Analogue Scale (VAS).

The adjective "transparent", applied to a coating, indicates that the centre covered by the coating can be seen. This term lends itself to various nuances, so that a material can be totally or partly transparent. Transparency can be measured by discontinuous or continuous hedonic scales, in particular with a Visual Analogue Scale (VAS).

"Stable under environmental conditions", referring to the confectionery product according to the present invention, means a product that wholly or partly maintains its organoleptic properties over time and under certain humidity and temperature conditions. Stability can be evaluated by subjecting the product to accelerated aging conditions in chambers with controlled temperature and humidity.

The invention also relates to a pack comprising a container which is at least partly transparent, and a number of pieces of one or more confectionery products with a transparent coating contained in said container. Each confectionery product can be contained in the container in loose, unwrapped form. The centres of the confectionery product are thus visible through the hard, transparent coating and through the transparent part of the container. Said container is preferably closed, but is not airtight and does not contain glass.

A further subject of the invention is a process for the preparation of confectionery products comprising the following steps:
a) providing a centre comprising one or more regions of confectionery material, preferably with different colours visible on the surface of the centre if a plurality of regions are made;
b) providing a hard, crunchy transparent coating comprising over 90% of isomalt syrup and under 3% powdered isomalt by weight of the dry coating;
c) storing the coated centres under controlled environmental conditions, wherein the coating does not contain opacifying ingredients selected from titanium dioxide, calcium carbonate, starch and calcium phosphate.

### Description of figures

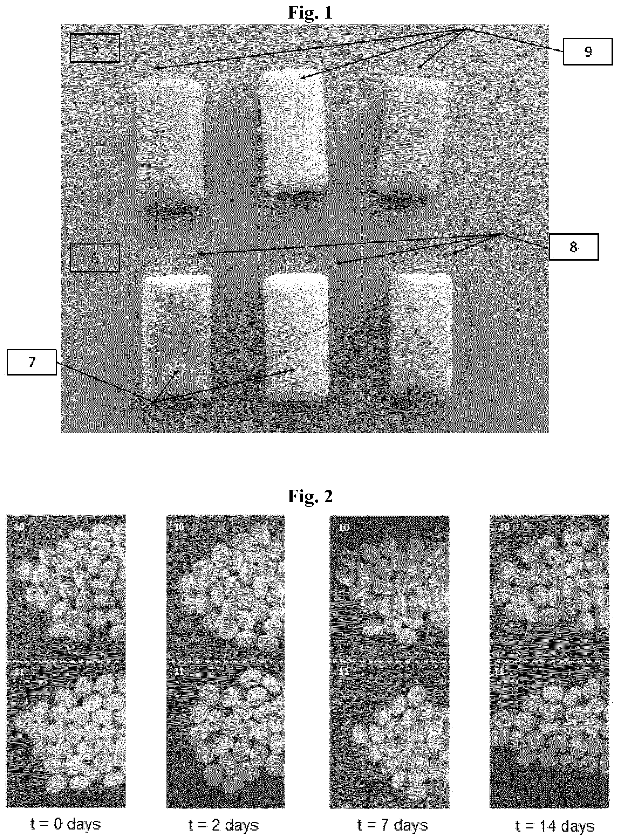

**Fig. 1****:** Comparison figure from accelerated aging test under Mediterranean conditions - loss of transparency due to crystallisation wherein the absence of the graining effect is observed in dragees according to the invention, whereas graining is present in the dragées according to the prior art.

Explanation of reference numbers:
5: three dragees made according to the invention, example Aₐ, t = 2.
6: three dragees made according to the prior art, example Bₐ, t = 2, with at least partly grainy coating.
7: part of the coating of the dragees according to the prior art which has not yet grained; the colour of the centre of both the coloured side and the white side can be seen.
8: coating zones according to the prior art with graining; the coating appears white and opaque.
9: the coating according to the invention at t = 2 remains transparent on both the coloured side and the white side.
   **Fig. 2****:** Variation in transparency over time
10 - Dragees of formulation C according to the invention aged until the transparency is stable.
11 - Dragées of formulation C made on a second occasion and photographed together with dragees (10) immediately after manufacture (t = 0) and after 2, 7 and 14 days.

### Detailed description of the invention

The centre of the confectionery product according to the invention is visible through the transparent coating and can consist of one or more regions, optionally characterised by a plurality of colours visible on the outer surface of the centre. The hard, crunchy, transparent coating, stable under various environmental conditions, comprises over 90% of isomalt syrup and under 3% powdered isomalt by weight of the dry coating.

The regions that make up the centre can consist of the same confectionery material or different confectionery materials. Each of the regions can individually consist of chewing gum, chewy candy, hard candy, fondant, gummy candy, inclusions and combinations thereof.

Said confectionery materials are illustrated, for example, in Silesia Confiserie Manual No. 3. "Inclusions" means foods or ingredients present in the form of small grains. Inclusions can consist of small fruits such as bilberries, blackcurrants, etc. or whole or chopped nuts such as walnuts, hazelnuts and almonds, or flavourings in supported form or calcium carbonate granules covered with alginate. Inclusions can also consist of small candies, chocolate drops, pills, gum base granules or chewing gum granules, and combinations thereof.

The centre can therefore comprise two or more regions with different colours that appear to be formed preferably by sides or strips of two or more alternating colours, or by spots of colour against a background and combinations thereof.

The products according to the invention can also optionally present chequered or spiral patterns, with decorations in various geometrical shapes. The regions can also consist of a main region and a secondary region with a decorative function, printed on the surface of the centre. In such case said second region can also substantially consist of a colouring, optionally with its excipients and additives.

Lists of colourings and indications for their use are contained in manuals such as Sugar Confectionery and Chocolate Manufacture (Lees and Jackson, St Edmundsbury Press Ltd., Great Britain 2008) and in the legislation of various countries.

The different colours of the centre regions may indicate the presence of functional ingredients characterising said regions. In this way, functional ingredients can be kept separate by inserting them into different regions of the core, and consumers can see this due to the colour of the regions visible through the coating. Different functional ingredients, which could optionally be reactive with one another, such as ascorbic acid and sodium bicarbonate, can thus be advantageously inserted in the same formulation, remaining separate until they reach the end user.

The coating of the product according to the invention does not contain opacifying agents such as titanium dioxide, calcium carbonate, starch or calcium phosphate.

The coating preferably does not contain emulsifiers, such as sucrose esters, salts of fatty acids, sorbitan esters, optionally polyethoxylated, lecithins or mixtures thereof. Emulsifiers are known to influence crystallisation, and can opacify otherwise transparent coatings.

The coating preferably does not contain intentionally added sorbitol or xylitol. Even more preferably, the hard coating does not contain further sugars or polyalcohols apart from isomalt, maltitol syrup, polydextrose and mixtures thereof.

The coating can also preferably contain maltitol syrup or polydextrose amounting to 0.1% to 5% by weight of the coating. The hard coating is preferably polished, for example with waxes, fats, shellac or mixtures thereof.

High percentages of isomalt, combined with low percentages of maltitol syrup or polydextrose and optional polishing, contribute to the stability of the product and enhance its crunchiness. In the prior art, powders are commonly used in the process of obtaining the hard coating in order to accelerate drying, due both to a simple effect of physical adsorption of humidity and to acceleration of the process of crystallisation of the syrups applied to the confectionery centres. The use of powder also increases the crunchiness of the hard coating. It has been found that particularly transparent coatings can be obtained by limiting the amount of powder. Moreover, their crunchiness is not reduced by the lower content of isomalt powders or other powders.

Unlike the coating illustrated by the prior art, the coating according to the invention contains under 2% of binding agents or none at all.

Binding agents such as gum arabic, gum talha, gelatin, carrageenans and other polysaccharides are normally used in syrup formulations for the hard coating, because they help the coating to adhere to the centre and give it a greater structure and physical strength. EP 1289377 describes hard transparent coatings wherein said binding agents are used in the coating and constitute up to 5% of the finished product (Table II).

Syrups comprising isomalt are more transparent when the coating has been applied, and the use of binding agents can be minimised or eliminated. The syrups still adhere extremely well to the cores, while their strength and structure are not reduced, and they still remain crunchy during storage.

The transparency of the coating is preferably greater than 6, more preferably greater than 7, and even more preferably greater than 8, when measured on a VAS transparency scale with values from 0 to 10 wherein the value 0 indicates "none (completely opaque)" and the value 10 indicates "complete (glass type)".

The crunchiness of the product according to the invention is preferably greater than 5, more preferably greater than 6 and even more preferably greater than 7 when measured on a VAS crunchiness scale wherein the value 0 indicates "no crunchiness (extremely soft)" and the value 10 indicates "extremely crunchy".

The centres preferably comprise at least one chewing gum region, and preferably consist of a plurality of regions, preferably two or multiples of two, characterised by different colours which are visible on the surface of the centres.

"Different colours" does not necessarily mean that each region has a specific colour, but that each region has a different colour from the adjacent region. Thus a centre consisting of four adjacent regions may appear to consist of two regions of a first colour alternating with two regions of a second different colour, or four regions each with a different colour from the other three. The colours of the centres may therefore be alternating or different for each region.

If the centres consist of a plurality of chewing gum regions, each region can consist of the same chewing gum formulation, one or more of which may not include any colouring while others may include one or more colourings that differ by region, so that each region can be distinguished from the adjacent regions by its intrinsic colour or that conferred by the colourings.

Alternatively, a first region of the centre consists of a chewing gum formulation and a second region consists of inclusions visible on the surface of the centre.

Centres comprising at least one chewing gum region can be made in any shape, such as sticks, slabs or dragees which may be pillow-shaped, spherical, cubic or discoidal, optionally elongated and ellipsoidal. The gum can contain a region consisting of a filling, which may be totally included in the centre or be visible from the exterior on one or more sides of the chewing gum. Said filling may be liquid, solid, granular or gelatinous.

The chewing gum region comprises at least one gum base and one sweetener. The sweetener can be selected from sugars (in solid form, such as sucrose or glucose, or in the form of syrup, such as glucose syrup), polyols (in solid form, such as sorbitol, or in the form of syrup, such as maltitol syrup) and combinations thereof. The polyols can be selected from sorbitol, mannitol, maltitol, isomalt, erythritol, xylitol, maltitol syrup and mixtures thereof. The sweetener used in the chewing gum formulation preferably does not contain sugar. The sweetener preferably consists of a mixture of one or more polyols. Said sweetener more preferably does not contain isomalt.

The first stage of the centre preparation process is to make a mixture containing at least the gum base and a sweetener. The mixture can also contain intensive sweeteners, flavouring agents in solid or liquid form, wetting agents, technological adjuvants such as emulsifiers or plasticisers, active pharmaceutical ingredients, plant extracts, functional ingredients such as vitamins or mineral salts, and colourings.

The mixture can be prepared by known methods, for example with the use of continuous extruders or non-continuous mixing apparatus. When the mixture has been prepared, it usually undergoes two consecutive extrusion stages, and is then processed in a plurality of centres. Some ingredients of the mixture can optionally be added during the extrusion stages. At least one of the masses preferably consists of chewing gum. The centres are preferably pillow-shaped and present two sides, each consisting of a region, having different colours from one another. Alternatively, the centres have an elongated discoid shape and consist of segments with different colours that appear on the surface of the dragee as strips of alternating colours.

One of the regions in the centre is preferably characterised by a low percentage of gum base, such as less than 25%, preferably less than 20%, of gum base, and more than 50%, preferably more than 65%, of xylitol (percentages of the total content of the single chewing gum region). Said xylitol preferably has a mean particle size of less than 400 µm, more preferably less than 100 µm. The region with a high percentage of gum base preferably has a water content ranging between 1% and 4%, preferably between 1.2% and 2% (percentages of the total content of the single chewing gum region). The region with a low percentage of gum base preferably contains one or more food colourings. The preferred colourings are in the form of aluminium lake.

A second chewing gum region is characterised by a high percentage of gum base, and is preferably used in combination with the preceding one. Said second region preferably consists of over 35% gum base and under 10% xylitol (percentages of the total content of the single chewing gum region). Even more preferably, said second region does not contain xylitol. The region with a high percentage of gum base preferably has a water content ranging between 0.1% and 0.9%, preferably between 0.3% and 0.6% (percentages of the total content of the single chewing gum region). The region with a high percentage of gum base preferably does not contain colourings, but is characterised by its own intrinsic colour.

The two regions described above can be combined during coextrusion, after characterisation with different colours, to form the centres, although the different percentages of gum base give the two formulations different rheological properties. The isomalt coating according to the invention allows the regions characterised by different colours to be seen, while the two different formulations offer two different sensory experiences. The first formulation makes the product softer on first bite, accompanied, where present, by the freshness of xylitol, while the second formulation (with a high percentage of gum base) provides a long-lasting flavour and chewy consistency.

Thus visually perceptible characteristics (the centre with regions of different colours visible through the transparent coating) are advantageously combined with flavour characteristics (different consistencies and sensations of freshness).

The combination of two regions with a high and low concentration of gum base in a centre, according to the preferred embodiment wherein the colour is added to the region with a low concentration of gum base, is particularly effective in enhancing the transparency of the isomalt coating of the invention, because it facilitates the process of obtaining the confectionery product according to the invention. The process comprises the following stages:
a) providing a plurality of centres, each comprising one or more regions made of confectionery material, optionally with different colours visible on the outer surface of the centre;
b) coating said centres with over 90% isomalt syrup and under 3% powdered isomalt by weight of the dry coating to give a transparent, crunchy, hard, stable coating;
c) storing the coated centres under controlled environmental conditions.

Controlled environmental conditions suitable for stage c) are room temperature, for example from 18°C to 22°C, and a relative humidity ranging from 30% to 70%.

The transparency of the coating increases during stage c), preferably reaching at least 50% of the maximum transparency in 7 days; even more preferably the coating reaches at least 60% of the maximum transparency in 7 days, or at least 80% of the maximum transparency in 14 days. Storage stage c) preferably lasts at least 2 days, preferably at least 7 days, and even more preferably at least 14 days. After stage c) the coated confectionery products can be directly packaged in non-airtight containers and then subjected to storage stage 7, namely maturing of stage c), during which the colours become more visible from the outside and a partial transfer of colour from the centre to the coating may take place.

The preferred centres for use in the method according to the invention at stage a) consist of regions characterised by a low percentage of gum base alternating with regions with a high percentage of gum base, as described above.

The hard transparent coating according to the invention preferably contains residual water in a percentage ranging between 0.1% and 2%, even more preferably between 0.3% and 1.5%.

One, more or all the regions forming the centre can consist of hard or chewy (soft) candies, either sugar-based or sugar-free, of the types normally known.

In general terms, hard candies are characterised by a hard, rigid consistency when bitten, consist mainly of sugars or sugar substitutes in the vitreous phase, and contain less than 3% water. An example of hard candy is Golia Activ Plus® candies.

Chewy candies are characterised by a consistency which is soft at the first bite, mainly consist of sugars or sugar substitutes in a phase ranging from at least partly to totally crystalline, and commonly contain more than 3%, preferably 5% to 10%, water. They commonly contain fatty texturising agents such as polysaccharides (e.g. gellan and gum arabic) and proteins (gelatin). An example of soft candy is Fruittella® candies.

Some candies consist of a mass of candy which is hard at the time of manufacture, but later crystallises and becomes chewable. Said type of candy mass is preferred because it withstands the coating stage better than other soft candies.

One, more or all the regions forming the centre can alternatively consist of fondant. Fondant is a well-known confectionery material, mainly consisting of sugar or sugar substitute which is finely crystallised and surrounded by a syrup such as glucose syrup or maltitol syrup.

One, more or all the regions forming the centre can also consist of jelly candy material. Gummy candies are well known; they can be sugar-based or sugar-free and contain a mixture of one or more gelling agents such as starches, pectin, gum arabic, gelatin, gellan and carrageenan. An example of gummy candies is Goleador® candies.

The masses of hard or chewy candy, fondant or jelly candies can contain conventional ingredients and additives such as intensive sweeteners, flavouring agents in solid or liquid form, wetting agents, technological adjuvants such as emulsifiers or plasticisers, additives, active pharmaceutical ingredients, plant extracts, functional ingredients such as vitamins or mineral salts, and colourings.

The information reported above regarding the positioning of the colours of the chewing gum regions also applies to regions consisting of hard, chewy or gummy candy or fondant.

Masses of hard, chewy or jelly candies and fondant can be advantageously coextruded and then shaped to be embedded in the cores according to the present invention. All such masses can contribute, either alone or in combination with one another and with chewing gum masses, to constituting the centres according to the invention. Each of said masses can also contain inclusions, in which case they constitute the entire centre or a region thereof.

The information reported above regarding the shapes of the centres comprising chewing gum also applies to centres wholly or partly consisting of other confectionery materials.

The invention also relates to a pack comprising a container which is at least partly transparent and a number of pieces of one or more confectionery products with a transparent coating contained in said container in such a way that consumers can perceive the uniqueness of the food product even before opening the pack.

The containers are advantageously made of semirigid plastic materials. Said materials can be wholly or partly transparent and can be packaged on the same lines as used for common cardboard packaging, preferably to form boxes such as a flip-top box with or without a sliding side.

The plastic used to make the container is preferably selected from PET (polyethylene terephthalate), PVC (polyvinyl chloride), PP (polypropylene) and PE (polyethylene) and combinations thereof. A particularly preferred material is polyethylene terephthalate.

Semirigid plastic materials typically have a thickness ranging between 50 µm and 700 µm, preferably between 100 µm and 500 µm, and more preferably between 200 µm and 400 µm.

The container of the pack can also be wrapped in an outer wrapping made of a transparent flexible material, in such a way that the centres are visible through the flexible covering material, through the transparent portion of the container and through the hard transparent coating of the confectionery product. Flexible, non-airtight transparent containers and materials external to the container can be used. The stability of the product under the various environmental conditions is such that the use of materials that require processing under particular conditions with particular machinery in order to be made airtight, for example by hermetic sealing, is unnecessary.

Its stability under different environmental conditions is such that the product can be marketed in dry or tropical climates, and the consumer can open the pack without being obliged to consume the product rapidly so as to prevent it from deteriorating.

When the product according to the invention is ready for consumption, after stage c), the transparency of the coating is greater than 6, preferably greater than 7, and even more preferably greater than 8, when measured on a VAS scale with values from 0 to 10 wherein the value 0 indicates "none (completely opaque)" and the value 10 indicates "complete (glass type)".

The transparency of the dragees according to the invention, packaged in a container consisting of a non-airtight semirigid plastic box with at least one transparent portion, decreases by less than 2 units on the VAS scale, preferably less than 1 unit on the VAS scale, during a residence time of 24h, 48 and up to 96h in a climatic chamber under tropical conditions (40°C, 80% R.H.). The transparency of the dragees according to the invention, packaged in a container consisting of a semirigid plastic box with at least one transparent portion, and an outer wrapping made of a transparent flexible plastic material, preferably decreases or increases by less than 0.3 units on the VAS scale during a residence time of 24h, 48 and up to 96h in a climatic chamber under tropical conditions (40°C, 80% R.H.).

The crunchiness of the product is preferably measured on a VAS scale wherein the value 0 indicates "no crunchiness (extremely soft)" and the value 10 indicates "extremely crunchy".

The crunchiness of the dragees according to the invention, packaged in a container consisting of a non-airtight semirigid plastic box with at least one transparent portion, decreases by less than 2 units on the VAS scale during a residence time of 24h in a climatic chamber under tropical conditions (40°C, 80% R.H.). The crunchiness of the dragees according to the invention preferably decreases by less than 1, and more preferably less than 0.5 units on the VAS scale during a residence time of 24h, 48 and up to 96h in a climatic chamber under tropical conditions.

The pack described, comprising a transparent isomalt coating of the invention and a container with at least one transparent part, is designed not to cause melting or leakage of liquid from the coating when placed under tropical conditions for 16 or 24 h, even if the container is partly open. In this way, the use of a transparent coating which is also stable under environmental conditions provides a financial advantage for both manufacturer and consumer. The ability of the product to maintain its properties under different environmental conditions (tropical and Mediterranean) has been tested on formulations according to the invention by comparison with formulations according to the best example of the prior art, consisting of the hard transparent sorbitol-based coating described in EP 1289377 (Table 1).

**Table 1: Dragees with hard transparent coating on a chewing gum core according to the invention, and comparator according to EP1289377**

| **Ingredient** | | **% of total finished product** | | | |
|---|---|---|---|---|---|
| | | **A Invention** | **B Comparator** | **C Invention** | **D Comparator** |
| **Chewing gum centre:** pillow-shaped with two chewing gum regions, consisting of a green side and a white side. | | 70 | 70 | | |
| **Chewing gum centre according to Table 2:** Elongated discoidal centre with four alternating white and blue segments visible as strips on the surface of the centre | | | | 75 | 75 |
| **Hard coating according to the invention*:** | | | | | |
| Isomalt GS | 94% | 30 | | 25 | |
| Powdered isomalt | 1% | | | | |
| Flavourings, sweetener, wax q.s. for | 100% | | | | |
| **Hard coating according to the prior art*:** | | | | | |
| Sorbitol (from syrup) | 92.7% | | | | |
| Powdered sorbitol | 1% | | 30 | | 25 |
| Gum arabic | 1.5% | | | | |
| Flavourings, sweetener, wax q.s. for | 100% | | | | |
| **Total** | | **100** | **100** | **100** | **100** |

| | | | | | |
|---|---|---|---|---|---|
| *Percentages by weight of dry coating | | | | | |

**Table 2: Particularly preferred chewing gum formulations of different colours**

| **Ingredient** | **%** | |
|---|---|---|
| **Chewing gum formulation I** | **60** | |
| **Chewing gum formulation II** | **40** | |
| **Total** | **100** | |
| Description | Elongated discoidal centre with four alternating white and blue segments visible as strips on the surface of the centre. | |

| **Ingredient** | % | |
|---|---|---|
| | **Chewing gum formulation I** | **Chewing gum formulation II** |
| Gum base | 39 | 18 |
| Xylitol 50 microns | 0 | 71,4 |
| Sorbitol | 48 | 0 |
| Maltitol syrup | 3 | 10 |
| Glycerol | 7 | 0 |
| Acesulfame K | 0 | 0 |
| Encapsulated aspartame | 0,8 | 0 |
| Aspartame | 0,2 | 0 |
| Flavourings | 2 | 0,5 |
| Brilliant blue aluminium lake | 0 | 0,1 |
| (residual water) | 0,45 | 1,5 |
| **Total** | 100 | 100 |
| Visual description | White chewing gum formulation | Blue chewing gum formulation |
| Sensory description | Very elastic gum, strong mint flavour, long-lasting | Very soft, juicy gum, delicate mint flavour, freshness of xylitol, short-lasting |

### Accelerated aging tests under tropical conditions - loss of transparency and crunchiness

Formulations A, B, C and D were packaged by two procedures, as reported in Table 3. The core is visible through the packaging and the coating.

**Table 3: packaging procedure**

| **Name of formulations** | **Type of packaging** |
|---|---|
| A | Transparent PET boxes, with colour printing on part of the surface, covered by an outer wrapping made of transparent flexible PP film. |
| B | |
| C | |
| D | |
| Aa | As above, but with the upper part of the PP outer wrapping removed. |
| Ba | |
| Cₐ | |
| Dₐ | |

The boxes thus prepared were placed in a climatic chamber at 40°C with 80% R.H. (tropical conditions), Five expert tasters assessed the transparency and crunchiness of the eight above-mentioned formulations on a VAS scale. One box per formulation was removed from the climatic chamber after various residence times, stabilised for 24h and assessed. In the VAS transparency scale, the value 0 indicated "none (completely opaque)" and the value 10 indicated "complete (glass type)". Higher values indicate greater transparency. In the VAS crunchiness scale, the value 0 indicated "no crunchiness (extremely soft)" and the value 10 indicated "extremely crunchy". Higher values indicate greater crunchiness.

Table 4 shows the mean transparency values scored on a VAS scale by the five tasters, from t=0 (start) to t=168 hours.

**Table 4: Transparency under tropical conditions**

| **Formulations** | | | **Hours** | | |
|---|---|---|---|---|---|
| | **0** | **24** | **48** | **96** | **168** |
| A | 7,4 | 7,4 | 7,8 | 7,3 | 6,9 |
| B | 6,3 | 6,2 | 6,0 | 5,8 | 5,3 |
| C | 8,4 | 8,6 | 8,5 | 8,6 | 8,6 |
| D | 7,7 | 7,2 | 7,4 | 7,2 | 5,9 |
| Aₐ | 7,4 | 6,7 | 6,6 | 6.6 | N/A |
| Bₐ | 6,3 | 6,1 | 4,7 | N/A | N/A |
| Cₐ | 8,4 | 8,2 | 8,3 | 8.0 | N/A |
| Dₐ | 7.7 | N/A | N/A | N/A | N/A |

| | | | | | |
|---|---|---|---|---|---|
| N/A = not assessable due to excessive deterioration. | | | | | |

Formulation A is more transparent than the corresponding B made according to the prior art at time 0, namely under the starting conditions. Moreover, while formulation B loses transparency over time, Formulation A remains stable up to 96h. Thus the difference in transparency increases over time in favour of the formulation according to the invention. Similar considerations apply when formulations C and D are compared.

Similarly, formulation Aₐ is more transparent than formulation Bₐ as from time 0, and the same applies to the pair Cₐ vs. Dₐ. The formulations of this series deteriorate more than the formulations with closed outer wrapping. When the formulations can no longer be assessed due to excessive deterioration (melting or loss of coating), they are identified by the code N/A = Not Assessable. Loss of transparency is always more marked in the case of the formulations according to the prior art, which reach the N/A state sooner than those according to the invention.

Table 5 shows the mean crunchiness values scored on a VAS scale by five tasters, from t=0 (start) to t=168 hours.

**Table 5: Crunchiness under tropical conditions**

| **formulations** | | | **hours** | | |
|---|---|---|---|---|---|
| | **0** | **24** | **48** | **96** | **168** |
| A | 7,8 | 8,8 | 8,2 | 8,2 | 8,6 |
| B | 4,2 | 1,6 | 2,1 | 1,4 | 0,0 |
| C | 6,4 | 5,1 | 6,0 | 4,4 | 1,4 |
| D | 3,8 | 2,2 | 2,1 | 2,6 | 1,0 |
| Aₐ | 7,8 | 7,8 | 8,2 | 7.7 | N/A |
| Bₐ | 4,2 | 1,4 | 1,1 | N/A | N/A |
| Cₐ | 6,4 | 5,0 | 3,9 | 1.0 | N/A |
| Dₐ | 3.8 | N/A | N/A | N/A | N/A |

All the considerations reported for transparency also apply to the crunchiness values. The data reported therefore demonstrate that the formulations according to the invention maintain their crunchiness for longer than the formulations according to the prior art.

### Accelerated aging test under Mediterranean conditions - loss of transparency due to crystallisation.

In this test, the formulations were placed in a climatic chamber regulated to a "Mediterranean" cycle, with alternating high and low humidity stages: 12h, 40°C, 80% R.H. / 12h, 40°C, 40% R.H. The samples of formulations A, B, C and D and Aₐ, Bₐ, Cₐ and Dₐ were prepared as illustrated in Table 3. Five expert assessors assessed the percentage of dragées presenting graining for the eight formulations prepared as above, at different residence times in the climatic chamber, at which one box, for example, was removed from the climatic chamber. The boxes were then placed in a dryer for a suitable time, at the times specified below:
t = 0: dragees under initial conditions;
t = 1: dragees after 48h in climatic chamber and 48h in dryer;
t = 2: dragees after 1 week in climatic chamber and 1 week in dryer.

The mean percentage of dragees with graining, obtained from the assessors' scores, is illustrated in Table 6 below.

All samples began without obvious graining. The samples according to the prior art begin to show unacceptable graining at t=2 when packaged with wrapping and outer wrapping, whereas unacceptable graining already appears at t1 if the outer wrapping is lacking.

Conversely, none of the samples according to the invention presented any graining during this accelerated aging test, thus demonstrating the greater stability of the product under environmental conditions.

**Table 6: Percentage of dragées with graining**

| **Formulations** | **times** | | |
|---|---|---|---|
| | **0** | **1** | **2** |
| A | 0,0 | 0,0 | 0,0 |
| B | 0,0 | 0,0 | 15,5 |
| C | 0,0 | 0,0 | 0,0 |
| D | 0,0 | 0,0 | 19,2 |
| Aₐ | 0,0 | 0,0 | 0,0 |
| Bₐ | 0,0 | 12,6 | 36,0 |
| Cₐ | 0,0 | 0,0 | 0,0 |
| Dₐ | 0,0 | 8,6 | 25,3 |

Fig. 1 shows three dragées according to the invention (e.g. Aₐ) and according to the prior art (Bₐ) at time t 2. Graining only takes place in the dragées according to the prior art, unacceptably reducing their transparency.

It was also found that isomalt coatings according to the invention are not only transparent and stable under environmental conditions, but the colours of the underlying core, though already visible immediately after the coating has been completed, become more visible when the coated product is stored under controlled conditions.

The transparency increases over time to a particularly marked extent when centres having regions with colourings are coated with a coating according to the invention and the humidity is greater than that of the coating.

### Test of increase in transparency after coating

The dragees of formulation C in Table 1 were made as described and placed at room temperature until the transparency effect of the coating had stabilised. New dragees were then prepared according to formulation C, and compared with the previously stabilised dragees at different times: immediately after preparation (t = 0) and after 2, 7 and 14 days' storage at room temperature. The comparison was conducted by five expert assessors who assessed the transparency of the coating of the sample at the times indicated, by comparison with the stabilised sample, to which a transparency value = 100% was assigned. The mean scores are shown in Table 7.

**Table 7: Percentage transparency over time of formulation C compared with an identical formulation previously stabilised to maximum transparency**

| **time (days)** | 0 | 2 | 7 | 14 |
|---|---|---|---|---|
| **% transparency** | 34 | 54 | 68 | 86 |

Fig. 2 shows the stabilised dragees (10) and dragees made on a second occasion (11) at the various assessment times.

It is clear from the figure and the assessment that the transparency of formulation C made according to the invention increases during storage, reaching values close to half of the final values in two days, and then gradually improving until it reaches values very close to the final values in two weeks.

The invention is described in greater detail in the examples below.

### Examples 1 and 2: Chewing gum formulations of different colours

Disclosed are chewing gum formulations which can be used as single regions in a confectionery centre. The percentages are calculated as a percentage of the single formulation.

| **Ingredient** | **%** | |
|---|---|---|
| | **Example 1** | **Example 2** |
| Gum base | 40 | 40 |
| Xylitol | 50,5 | 50,65 |
| Maltitol syrup | 5 | 5 |
| Acesulfame K | 0,1 | 0,1 |
| Encapsulated aspartame | 2 | 2 |
| Flavourings | 2,25 | 2,25 |
| 10% curcumin extract | 0,12 | 0 |
| 10% E133 solution | 0,03 | 0 |
| **Total** | 100 | 100 |
| **Description** | Green chewing gum formulation | White chewing gum formulation |

### Examples 3 and 4: Confectionery centres consisting of chewing gum regions

Disclosed are confectionery centres which can be used as centres to obtain products according to the invention or not according to the invention. The percentages are calculated as a percentage of the centre.

| **Ingredient** | **%** | |
|---|---|---|
| | **Example 3** | **Example 4** |
| Example 1 | 50 | 5 |
| Example 2 | 50 | 95 |
| **Total** | **100** | **100** |
| **Description** | Pillow-shaped centre with two regions consisting of a green side and a white side. | Cubic centre with three layered regions: two outer white regions and a central green region visible on four sides. |

### Examples 5, 6 and 7: Confectionery centres obtained by combining different materials

| **Ingredient** | **%** | | |
|---|---|---|---|
| | **Example 5** | **Example 6** | **Example 7** |
| Example 2 | 96 | 50 | |
| Yellow chewy candy | | | 50 |
| Red fondant | | 50 | |
| Black gummy candy | | | 50 |
| Blue granules of calcium carbonate in alginate | 4 | | |
| **Total** | **100** | **100** | **100** |
| **Description** | Pillow-shaped centre with white background and blue inclusions | Pillow-shaped centre with a white side and a red side | Ellipsoida l centre divided into two halves: one black and one yellow |

### Examples 8 9 10 11 and 12

| **Ingredient** | | **% of total finished product** | | | | |
|---|---|---|---|---|---|---|
| | | **8** | **9** | **10** | **11** | **12** |
| **Centre according to example 3** | | 75 | | | | |
| **Centre according to example 4** | | | 90 | | | |
| **Centre according to example 5** | | | | 80 | | |
| **Centre according to example 6** | | | | | 75 | |
| **Centre according to example 7** | | | | | | 60 |
| **Hard coating according to the invention*:** | | 25 | 10 | 20 | 25 | 40 added gum arabic 0.5% |
| Isomalt GS | 94% | | | | | |
| Powdered isomalt | 1% | | | | | |
| Flavourings, sweetener, wax q.s. for | 100% | | | | | |
| **Total** | | **100** | **100** | **100** | **100** | **100** |
| **Description** | | Dragée with hard, crunchy, transparent coating. The centre with two sides, one green and one white, is perfectly visible through the coating. | Dragée with hard, fragile, crunchy, transparent coating. The cubic centre with the green central region and two white regions is perfectly visible through the coating. | Dragée with hard, crunchy, transparent coating. The blue inclusions against the white background are perfectly visible through the coating | Dragée with hard, crunchy, transparent coating. The centre with two sides, one red and one white, is perfectly visible through the coating | Dragée with hard, chewy, crunchy, transparent coating. The centre with two sides, one black and one yellow, is perfectly visible through the coating |

| | | | | | | |
|---|---|---|---|---|---|---|
| * Percentages by weight of dry coating | | | | | | |

## Claims

1. A confectionery product comprising:
a) a transparent, crunchy outer hard coating comprising over 90% of isomalt syrup and under 3% powdered isomalt by weight of the dry coating;
b) a center comprising one or more regions of confectionery material, said center being visible through the transparent coating;
wherein the coating does not contain opacifying ingredients selected from titanium dioxide, calcium carbonate, starch and calcium phosphate.

2. A confectionery product according to claim 1 wherein the center comprises two or more regions individually consisting of: chewing gum, fondant, chewy candy, hard candy, jelly, inclusions and combinations thereof.

3. A confectionery product according to any one of the above claims wherein the hard coating does not contain any intentionally added sorbitol.

4. A confectionery product according to any one of the above claims wherein the hard coating does not contain any sugar or polyol except isomalt, hydrogenated starch hydrolysate, polydextrose and mixtures thereof.

5. A confectionery product according to any one of the above claims wherein said hard coating is further polished.

6. A confectionery product according to any one of the above claims wherein said coating contains less than 2% binding agents.

7. A confectionery product according to any one of the above claims wherein said coating contains 0.1% to 5% by weight of the coating of hydrogenated starch hydrolysate.

8. A confectionery product according to any one of the above claims wherein the center is **characterized by** a surface comprising two or more regions of different colours.

9. A packaging comprising an at least partly transparent container and a multitude of pieces of a confectionery product according to claims 1-8 contained in said container.

10. A process for the manufacturing of a confectionery product according to claims 1-8 comprising the steps of:
a) providing a plurality of centers each one comprising two or more regions of confectionery material;
b) providing a transparent, crunchy outer hard coating comprising over 90% of isomalt syrup and under 3% powdered isomalt by weight of the dry coating ;
c) storing the coated centers in environmentally controlled conditions; wherein the coating does not contain opacifying ingredients selected from titanium dioxide, calcium carbonate, starch and calcium phosphate.

## Patentansprüche

1. Ein Süßwarenprodukt, umfassend:
a) eine transparente, knusprige äußere Hartbeschichtung, die über 90 Gew.-% Isomaltsirup und unter 3 Gew.-% Isomaltpulver der Trocken-Beschichtung umfasst;
b) ein Zentrum, das einen oder mehrere Bereiche von Süßwaren-Material umfasst, wobei jenes Zentrum durch die transparente Beschichtung sichtbar ist;
wobei die Beschichtung keine trübenden Bestandteile enthält, ausgewählt aus Titandioxid, Calciumcarbonat, Stärke und Calciumphosphat.

2. Ein Süßwarenprodukt nach Anspruch 1, wobei das Zentrum zwei oder mehr Bereiche umfasst, die individuell aus: Kaugummi, Fondant, Kaubonbon, Bonbon, Gelee, Einschlüsse und Kombinationen davon besteht.

3. Ein Süßwarenprodukt nach einem der obigen Ansprüche, wobei die Hartbeschichtung kein absichtlich zugesetztes Sorbit enthält.

4. Ein Süßwarenprodukt nach einem der obigen Ansprüche, wobei die harte Beschichtung keinen Zucker oder Polyol außer Isomalt, hydriertem Stärkehydrolysat, Polydextrose und Gemische davon enthält.

5. Ein Süßwarenprodukt nach einem der obigen Ansprüche, wobei jene Hartbeschichtung des Weiteren poliert ist.

6. Ein Süßwarenprodukt nach einem der obigen Ansprüche, wobei jene Beschichtung weniger als 2% Bindemittel enthält.

7. Ein Süßwarenprodukt nach einem der obigen Ansprüche, wobei jene Beschichtung 0,1 bis 5 Gew.-% der Beschichtung aus hydriertem Stärkehydrolysat enthält.

8. Ein Süßwarenprodukt nach einem der obigen Ansprüche, wobei das Zentrum durch eine Oberfläche gekennzeichnet ist, die zwei oder mehr Bereiche mit unterschiedlicher Farbe umfasst.

9. Eine Verpackung umfassend mindestens einen teilweise transparenten Behälter und eine Vielzahl von Stücken eines Süßwarenproduktes nach den Ansprüchen 1-8, die in jenem Behälter enthalten ist.

10. Ein Verfahren zur Herstellung eines Süßwarenprodukts nach den Ansprüchen 1-8, umfassend die Schritte:
a) Bereitstellen einer Vielzahl von Zentren, von denen jedes zwei oder mehr Bereiche von Süßwarenmaterial umfasst;
b) Bereitstellen einer transparenten, knusprigen äußeren harten Beschichtung, die über 90 Gew.-% Isomaltsirup und unter 3 Gew.-% Isomaltpulver der Trocken-Beschichtung umfasst;
c) Lagern der beschichteten Zentren unter umweltkontrollierten Bedingungen;
wobei die Beschichtung keine trübenden Bestandteile enthält, ausgewählt aus Titandioxid, Calciumcarbonat, Stärke und Calciumphosphat.

## Revendications

1. Produit de confiserie comprenant :
a) un revêtement dur extérieur croquant, transparent, comprenant plus de 90 % de sirop d'isomalt et moins de 3 % d'isomalt en poudre en poids du revêtement sec ;
b) un centre comprenant une ou plusieurs région(s) de matériau de confiserie, ledit centre étant visible à travers le revêtement transparent ;
dans lequel le revêtement ne contient pas d'ingrédients opacifiants sélectionnés parmi du dioxyde de titane, du carbonate de calcium, de l'amidon et du phosphate de calcium.

2. Produit de confiserie selon la revendication 1, dans lequel le centre comprend deux régions ou plus, constituées individuellement de : chewing-gum, fondant, bonbons à mâcher, bonbons durs, gelée, inclusions et combinaisons correspondantes.

3. Produit de confiserie selon l'une quelconque des revendications précédentes, dans lequel le revêtement dur ne contient aucun sorbitol ajouté intentionnellement.

4. Produit de confiserie selon l'une quelconque des revendications précédentes, dans lequel le revêtement dur ne contient aucun sucre ou polyol, excepté un isomalt, un hydrolysat d'amidon hydrogéné, un polydextrose et des mélanges correspondants.

5. Produit de confiserie selon l'une quelconque des revendications précédentes, dans lequel le revêtement dur est en outre poli.

6. Produit de confiserie selon l'une quelconque des revendications précédentes, dans lequel ledit revêtement contient moins de 2 % d'agents de liaison.

7. Produit de confiserie selon l'une quelconque des revendications précédentes, dans lequel ledit revêtement contient 0,1 % à 5 % en poids du revêtement d'hydrolysat d'amidon hydrogéné.

8. Produit de confiserie selon l'une quelconque des revendications précédentes, dans lequel le centre est **caractérisé par** une surface comprenant deux régions ou plus de différentes couleurs.

9. Emballage comprenant un contenant au moins partiellement transparent et une multitude de pièces d'un produit de confiserie selon les revendications 1 à 8, contenues dans ledit contenant.

10. Procédé de fabrication d'un produit de confiserie selon les revendications 1 à 8, comprenant les étapes de :
a) fourniture d'une pluralité de centres, comprenant chacun deux régions ou plus de matériau de confiserie ;
b) fourniture d'un revêtement dur extérieur croquant, transparent comprenant plus de 90 % de sirop d'isomalt et moins de 3 % d'isomalt en poudre en poids du revêtement sec ;
c) stockage des centres revêtus dans des conditions environnementalement contrôlées ;
dans lequel le revêtement ne contient pas d'ingrédients opacifiants sélectionnés parmi du dioxyde de titane, du carbonate de calcium, de l'amidon et du phosphate de calcium.
